# FASCICULE DE BREVET EUROPEEN

(11) **EP 2 919 421 B1**
(45) Date de publication et mention de la délivrance du brevet: **19.05.2021**
(21) Numéro de dépôt: 15159030.4
(22) Date de dépôt: 13.03.2015
(51) Int. Cl.: H04L 12/46, H04L 12/66, H04L 29/06, H04L 12/40, H04L 29/08

(54) **Commutateur Ethernet, engin mobile et bus de transport de passagers comprenant ledit commutateur Ethernet**
Ethernet-Switch, fahrbares Gerät und Passagier-Transportbus, die einen solchen Ethernet-Switch umfassen
Ethernet switch, mobile machine and passenger bus including said Ethernet switch

(30) Priorité: 14.03.2014 FR 1452144
(43) Date de publication de la demande: 16.09.2015
(73) Titulaire: ACTIA PCs, 94700 Maisons Alfort (FR)
(72) Inventeur: Menvielle, Marc, 31650 AUZIELLE (FR); Ezvan, Dominique, 94440 MAROLLES EN BRIE (FR); Elter, Hervé, 77860 QUINCY-VOISINS (FR)
(74) Mandataire: Lavoix

(56) Documents cités:
- CN-A- 102 014 139
- CN-A- 102 149 225
- DE-A1-102011 005 088
- US-A1- 2009 138 136

## Description

La présente invention concerne un commutateur Ethernet, comprenant :
- un ensemble de ports Ethernet adaptés pour être connectés à des dispositifs respectifs via des liaisons Ethernet ;
- un module de commutation de trame Ethernet adapté pour recevoir une trame Ethernet, pour sélectionner un port Ethernet dudit ensemble en fonction de ladite trame Ethernet reçue et pour fournir ladite trame audit port Ethernet sélectionné.

De tels commutateurs Ethernet sont notamment utilisés dans des engins mobiles tels que des véhicules, notamment des bus de transport de passagers.

En effet, dans un tel bus de transport de passagers, de nombreux dispositifs, nommés ci-après dispositifs primaires, souvent installés par le constructeur du véhicule (calculateur injection moteur, freinage ABS, climatisation, capteurs vitesse) sont interconnectés à travers un bus de communication, souvent un bus système série CAN (en anglais « Controller Area Network »), l'ensemble constituant un réseau de communication local au bus de transport de passagers, nommé réseau primaire ci-après.

D'autres dispositifs, nommés ci-après dispositifs secondaires, tels que relatifs à la fonction de vérification de validité des titres de transport des passagers, au comptage des passagers, aux panneaux d'affichage des destinations et des temps d'arrivée estimés correspondants, à des fonctions de communication sans fil de données avec un centre superviseur distant etc. sont en général installés ensuite par le transporteur dans le bus de transport de passagers. Ils sont, eux, interconnectés par l'intermédiaire d'un ou de plusieurs commutateurs Ethernet, créant ainsi un réseau Ethernet local au bus de transport de passagers et nommé ci-après réseau secondaire ou réseau Ethernet.

Le réseau secondaire cohabite ainsi avec le réseau primaire et ces deux réseaux primaire et secondaire sont mis en œuvre de façon indépendante.

Il existe néanmoins parfois un système de passerelle permettant la transmission de données selon des conditions très restreintes.

Par exemple, une telle passerelle, disposée entre le bus CAN et le commutateur Ethernet, est adaptée pour délivrer exclusivement des données de vitesse, transmises par les capteurs de vitesse sur le bus CAN au commutateur Ethernet pour transmission à un ou des dispositifs secondaires, par exemple en charge de la prédiction du temps d'arrivée à la destination et/ou en charge de la communication avec le centre superviseur distant.

On connait par ailleurs du document US 2009/138136 un système de base de données embarqué à bord d'un véhicule, comprenant des nœuds 4 de distribution propres à recevoir des données provenant de capteurs et à enregistrer ces données dans une base de données. Le système est en outre configuré pour synchroniser les bases de données de tous les nœuds

L'invention est définie par les revendications indépendantes jointes.

Dans des opérations de maintenance, d'installation et/ou de test, il est connu de connecter sur le bus CAN un outil de gestion technique externe au bus de transport de passagers et adapté pour, sous le pilotage par un utilisateur dudit outil de maintenance, configurer et/ou tester un dispositif nouvellement connecté au bus de communication CAN, pour effectuer un diagnostic des dispositifs primaires lors d'une investigation suite à une panne dans le bus de transport de passagers et/ou pour effectuer une mise à jour de certains des dispositifs primaires.

La mise en œuvre d'opérations de maintenance, d'installation et/ou de test sur les dispositifs secondaires du réseau Ethernet nécessite la connexion d'outil(s) spécifique(s) au réseau Ethernet.

Il existe donc un besoin de simplifier la mise en œuvre des opérations de maintenance, d'installation et/ou de test, notamment dans ces bus de transport de passagers ou plus généralement les systèmes abritant ainsi des réseaux locaux de communication distincts.

A cet effet, suivant un premier aspect, l'invention propose un commutateur Ethernet du type précité caractérisé en ce qu'il comprend un connecteur adapté pour être connecté à un bus de communication distinct d'une liaison Ethernet ; ledit commutateur Ethernet étant caractérisé en outre en ce qu'il est adapté pour recevoir, via ledit connecteur, au moins un message transmis sur le bus de communication, pour réaliser, en fonction dudit message reçu, au moins une opération parmi une opération de test commutateur Ethernet.

Un tel commutateur Ethernet permet ainsi de piloter une opération de test du commutateur depuis un dispositif externe raccordé le temps de l'opération, au bus de communication.

Il sera ainsi possible, par l'intermédiaire d'un même outil, de piloter ces opérations de configuration, test, ou mise à jour sur le commutateur Ethernet du réseau local Ethernet et sur les dispositifs primaires connectés au bus de communication.

Dans des modes de réalisation, le commutateur Ethernet suivant l'invention comporte en outre une ou plusieurs des caractéristiques suivantes :
- le connecteur est adapté pour être connecté à un bus CAN ;
- le connecteur est un connecteur DB-9 ;
- le commutateur Ethernet est adapté en outre pour générer un message dont le contenu est fonction du résultat de ladite opération réalisée, et pour transmettre ledit message sur le bus de communication via ledit connecteur ;
- le commutateur Ethernet est adapté en outre pour recevoir, via ledit connecteur, au moins un message transmis sur le bus de communication, pour réaliser, en fonction dudit message reçu, au moins une opération parmi une opération de test ou diagnostic ou mise à jour relative à au moins un desdits ports Ethernet ou desdites liaisons Ethernet ;
- le commutateur Ethernet est adapté pour être installé dans un engin mobile.

Suivant un deuxième aspect, la présente invention propose un engin mobile selon la revendication 6 comprenant :
- au moins un commutateur Ethernet selon le premier aspect de l'invention,
- des liaisons Ethernet ;
- des premiers dispositifs connectés à des ports Ethernet respectifs du commutateur Ethernet via lesdites liaisons Ethernet ;
- au moins un bus de communication distinct d'un bus Ethernet et connecté au connecteur du commutateur Ethernet ;
- des seconds dispositifs connectés au bus de communication.

Ces caractéristiques et avantages de l'invention apparaîtront à la lecture de la description qui va suivre, donnée uniquement à titre d'exemple, et faite en référence aux dessins annexés, sur lesquels :
- la figure 1 est une vue d'un bus de transport de passagers dans un mode de réalisation de l'invention ;
- la figure 2 est une vue d'un commutateur Ethernet dans un mode de réalisation de l'invention ;
- la figure 3 représente un réseau primaire et un réseau secondaire dans un mode de réalisation de l'invention.

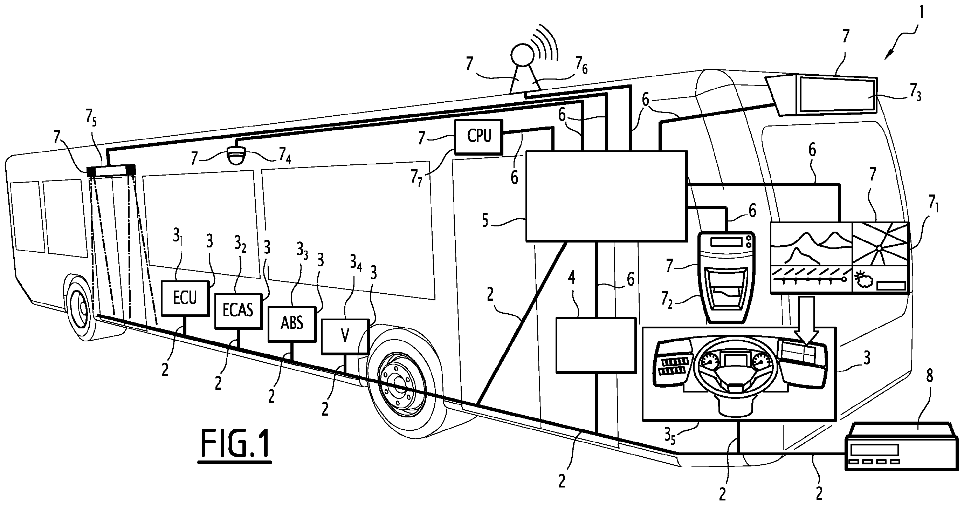

La figure 1 est une vue d'un bus 1 de transport de passagers dans un mode de réalisation de l'invention.

Le bus 1 comporte, comme indiqué ci-dessus, un réseau primaire comportant un bus 2 de communication, ici de type système série CAN, et des dispositifs primaires 3 interconnectés via le bus 2 de communication.

Ces dispositifs primaires 3 comportent chacun par exemple un connecteur DB-9 par lequel ils sont raccordés au bus CAN 2.

Dans le mode de réalisation considéré, le protocole de communication entre les dispositifs 3 sur le bus CAN 2 est de type J1939 (on notera que d'autres protocoles sont utilisés dans d'autres modes de réalisation).

Sur la figure 1, parmi ces dispositifs primaires 3 ont été représentés :
- un bloc 3₁ ECU relatif à la fonction injection moteur du bus 1 de transport de passagers ;
- un bloc 3₂ ECAS relatif à la fonction suspension pilotée du bus 1 ;
- un bloc 3₃ ABS relatif à la fonction freinage ABS du bus 1 ;
- un bloc 3₄ de capture de vitesse relatif à la mesure de vitesse du bus 1 ;
- un bloc 3₅ de tableau de bord.

Ces blocs comportent généralement des éléments matériels et/ou un calculateur sur lequel un logiciel s'exécute.

Des données diverses peuvent être échangées sur le bus de communication CAN 2 entre ces dispositifs primaires 3 : des données de vitesse mesurées par le bloc de capture 3₄ et destinées à être affichées sur le tableau de bord par le bloc 3₅ de tableau de bord, des données de commande détectées par le bloc 3₅ de tableau de bord et commandant un ou plusieurs des blocs 3₁, 3₂, 3₃ et 3₄.

Le bus 1 comporte également un réseau secondaire ou réseau Ethernet, comportant un ou plusieurs commutateur(s) Ethernet 5 (un seul a été représenté en figure 1), et des dispositifs secondaires 7.

Chaque dispositif secondaire 7 est relié par une liaison Ethernet 6 à un commutateur Ethernet 5.

Lorsqu'il y en a plusieurs, les commutateurs Ethernet 5 sont également reliés entre eux par une ou des liaisons Ethernet selon une topologie en étoile ou maillée par exemple.

Dans le mode de réalisation de l'invention représenté en figure 1, le commutateur Ethernet 5 est en outre connecté au bus de communication 2. Il comporte un connecteur, par exemple de type DB-9, permettant son raccordement au bus CAN 2.

Le commutateur Ethernet 5 est adapté pour recevoir des messages spécifiques qui lui sont adressés sur le bus CAN 2 et pour réaliser, en fonction dudit message reçu, des opérations de configuration, test, ou mise à jour du commutateur Ethernet.

Sur la figure 1, parmi ces dispositifs secondaires 7 ont été représentés :
- un bloc 7₁ d'affichage de contrôle relatif à l'affichage de données de contrôle destinées au conducteur du bus 1 sur un écran situé à proximité du tableau de bord ;
- un bloc 7₂ de validation des titres relatif à la validation des titres de transport présentés à une borne ou des bornes associées et à la collecte de données associées ;
- un bloc 7₃ d'affichage de destination relatif à l'affichage sur un écran de la destination et du temps de trajet estimé ;
- un bloc 7₄ vidéo relatif à la capture d'images vidéo par une caméra embarquée ;
- un bloc 7₅ de comptage de passagers relatif au comptage respectif des passagers montant et descendant du bus 1 ;
- un bloc 7₆ de communication sans fil relatif à la communication sans fil avec un centre superviseur distant (non représenté) ;
- un bloc 7₇ correspondant à une unité centrale (CPU).

Des données diverses peuvent être échangées entre ces dispositifs secondaires 7 via les liaisons 6 et le(s) commutateur(s) Ethernet 5.

Par exemple des données de comptage de passagers déterminées par le bloc 75 de comptage et/ou des données vidéo capturées par le bloc 7₄ sont transmises au bloc 7₁ d'affichage de contrôle pour l'affichage de ces données sur l'écran. Les données vidéo ou de comptage etc. sont transmises au bloc 7₆ de communication sans fil pour communication sans fil par ce dernier des données vidéo au centre superviseur distant.

Dans le cas considéré en référence à la figure 1, le bus 1 comporte en outre une passerelle 4.

Selon les cas, la passerelle 4 est adaptée pour relayer, vers un ou plusieurs dispositifs secondaires 7 du réseau Ethernet, certaines données transmises sur le bus de communication CAN 2. Par exemple les données de vitesse transmises sur le bus 2 CAN par le bloc 3₄ de capture sont relayées par la passerelle 4 vers au moins des dispositifs secondaires 7 du bus 1, et/ou au centre superviseur distant via les moyens de communication sans fil 7₆ etc.

Dans des phases de gestion technique du bus 1 comprenant des opérations d'installation, test ou diagnostic, un outil de gestion 8 est connecté au réseau CAN 2. L'outil de gestion technique 8 est adapté pour, une fois connecté au bus CAN 2, communiquer avec un ou plusieurs des dispositifs primaires 3 selon le protocole de communication J1939 et pour, via ces communications, configurer un dispositif 3 lors de son montage ou de son remontage dans le bus 1, et/ou pour tester les dispositifs primaires 3, par exemple après leur (re)montage.

L'outil de gestion 8 est en outre adapté pour effectuer pour communiquer avec un ou plusieurs des dispositifs primaires 3 lors de la survenue d'une panne à élucider dans le bus 1 et effectuer, en fonction de ces communications et de la panne survenue, un diagnostic du ou des dispositifs primaires 3.

Dans un mode de réalisation, l'outil 8 de gestion technique du bus 1 est adapté pour, lorsqu'il est raccordé au bus CAN 2, sous pilotage de l'utilisateur de l'outil 8 et/ou d'une routine logicielle s'exécutant de façon automatique, transmettre un message au format J1939 destiné au commutateur Ethernet 5 raccordé au bus CAN 2. Ce message incorpore une commande relative à un ou plusieurs éléments du réseau Ethernet. Dans le champ destinataire de ce message figure l'adresse identifiant ce commutateur Ethernet 5 dans le réseau primaire.

La commande comprend par exemple, selon les modes de réalisation :
- une commande de configuration dudit commutateur Ethernet 5 et/ou d'un ou
   plusieurs autres commutateurs Ethernet 5 du réseau Ethernet ; et/ou
- une commande de test dudit commutateur Ethernet 5 et/ou d'un ou plusieurs autres commutateurs Ethernet 5 du réseau Ethernet ; et/ou
- une commande de diagnostic dudit commutateur Ethernet 5 et/ou d'un ou plusieurs autres commutateurs Ethernet 5 du réseau Ethernet ; et/ou
- une commande de mise à jour dudit commutateur Ethernet 5 et/ou d'un ou plusieurs autres commutateurs Ethernet 5 du réseau Ethernet.

Une commande de configuration ou de test d'un commutateur Ethernet est par exemple transmise par l'outil de gestion technique 8 après le (re)montage du commutateur Ethernet dans le bus de transport de passagers 1.

Une commande de diagnostic est transmise suite à la détection d'une panne du bus 1.

Dans le mode de réalisation de l'invention, la commande comprend :
- une commande de test du câblage du réseau Ethernet ; et/ou
- une commande de diagnostic du câblage du réseau Ethernet ; et/ou
- une commande de test de la connexion du réseau Ethernet aux dispositifs secondaires 7 ; et/ou
- une commande de diagnostic d'un ou plusieurs dispositifs secondaires 7 ; et/ou
- une commande de mise à jour d'un ou plusieurs dispositifs secondaires 7.

Une commande de diagnostic du câblage est transmise lors de la survenue d'ne panne.

Un message généré par l'outil de gestion technique 8 comprenant une au moins de ces commandes est conforme au protocole J1939 et comprend un champ de destination J1939 indiquant l'adresse du (ou d'un) commutateur Ethernet 5 raccordé au bus CAN 2.

Le message comprend en outre la commande indiquant le type d'action commandée parmi l'ensemble de celles listée ci-dessus et lorsque cela est nécessaire, un identifiant des éléments (autre(s) commutateur(s) Ethernet 5, dispositifs secondaires 7) du réseau Ethernet vis-à-vis desquels cette action doit être réalisée.

Par exemple, une commande de diagnostic du dispositif secondaire 7₃ indiquera un identifiant de ce dispositif secondaire.

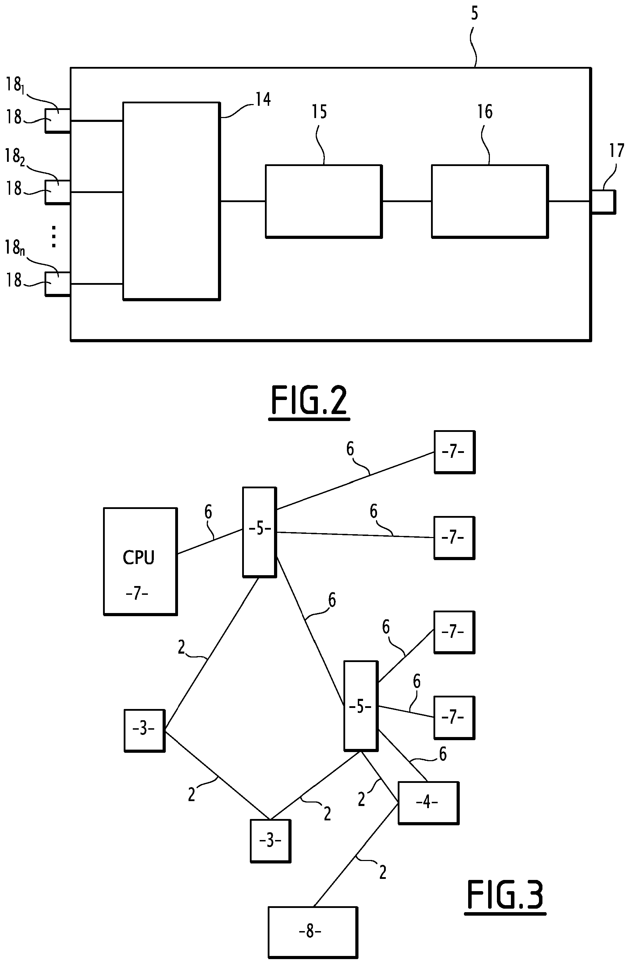

La figure 2 représente une vue d'un commutateur Ethernet 5 dans un mode de réalisation de l'invention.

Un tel commutateur est adapté pour traiter des commandes issues du bus CAN qui lui sont destinées et qui commandent des actions parmi celles détaillées ci-dessus à exercer sur le commutateur.

Un tel commutateur Ethernet comporte ainsi un bloc de commutation de trames Ethernet 14, un bloc de traitement 15, un contrôleur de bus de communication CAN 16, un connecteur 17 permettant le raccordement du commutateur Ethernet 5 au bus CAN 2 et une pluralité de ports Ethernet 18.

Par exemple, dans un mode de réalisation, le port Ethernet 18ᵢ est relié, via une liaison Ethernet 6, au dispositif secondaire 7ᵢ, i = 1 à 6.

Le bloc de commutation de trames Ethernet 16 est notamment adapté pour, de façon connue, lorsqu'il reçoit une trame Ethernet depuis un port Ethernet 18, sélectionner un port Ethernet 18 parmi la pluralité de ports Ethernet en fonction du champ de destination de la trame et délivrer la trame au port Internet 18 sélectionné.

Le contrôleur de bus de communication CAN 16 est adapté pour, lorsqu'un message au format J1939 envoyé par l'outil de gestion technique 8, et destiné au commutateur Ethernet 5 est reçu depuis le bus CAN 2 via le connecteur 17, extraire du message la commande incorporée dans le message et pour fournir cette commande extraite au bloc de traitement 15.

Le bloc de traitement 15 est adapté pour, sur réception de la commande de configuration, test, diagnostic ou mise à jour du commutateur Ethernet qui est transmise par le contrôleur de bus de communication CAN 16, en extraire la ou les actions associées.

Le bloc de traitement 15 est adapté pour mettre en œuvre une telle action commandée, i.e. la configuration, le test, le diagnostic ou la mise à jour requise du commutateur Ethernet.

Dans des modes de réalisation, la mise en œuvre par le bloc de traitement 15 de l'action commandée comprend par exemple un dialogue du bloc de traitement 15 avec le bloc de commutation 14 à travers une interface dédiée et la traduction par le bloc de traitement 15 de la commande issue du bus CAN en commandes correspondantes au bloc de commutation 14.

Les commandes au bloc de commutation peuvent être des commandes de configuration, de lancement de test, de lancement de diagnostic, de mise à jour ou de demande d'état, de résultat de test ou de résultat de diagnostic du commutateur Ethernet 5.

Une action de configuration telle que commandée affecte le pilotage du fonctionnement opérationnel du commutateur. Une configuration telle que commandée comporte par exemple le réglage de paramètres de fonctionnement du commutateur Ethernet tels que l'affectation d'indices de priorité en fonction de types de trames Ethernet, cette affectation étant indiquée dans la commande. Dans un autre exemple, la configuration est relative au filtrage des trames selon des critères indiqués dans la commande (par exemple, les trames émises par un dispositif secondaire, 76 par exemple, et destinées à un dispositif secondaire spécifique, doivent être supprimées par le commutateur Ethernet 5).

Dans des modes de réalisation, la mise à jour commandée du commutateur Ethernet 5 est une mise à jour du logiciel de commutateur Ethernet (c'est-à-dire la mise à jour d'instructions logicielles définissant le fonctionnement opérationnel du commutateur Ethernet), par exemple du logiciel du bloc de traitement 15.

Une action de test de commutateur Ethernet commandée peut par exemple porter sur la vérification par le commutateur Ethernet 5 qu'un port n° XX est bien raccordé à un dispositif secondaire.

Une action de demande de résultat de diagnostic telle que commandée comporte par exemple la récupération de codes d'erreur du bloc de commutation 14 Ethernet dans le cadre de la recherche de pannes dans le réseau Ethernet.

Dans un mode de réalisation, une fois la commande effectuée, le module de traitement 15 du commutateur Ethernet 5 est adapté pour générer, au format J1939, un message de réponse indiquant le résultat de l'action après qu'elle ait été mise en œuvre (par exemple : configuration requise ok ou KO etc.) destiné à l'outil de gestion technique 8, pour le fournir au contrôleur de bus de communication CAN 16, qui le transmet, conformément au protocole CAN, sur le bus CAN 2 via le connecteur 17 à destination de l'outil de gestion technique 8.

Tous les commutateurs Ethernet du réseau Ethernet du véhicule sont similaires au commutateur Ethernet représenté en figure 2 et détaillé ci-dessus et sont connectés au bus CAN afin de pouvoir recevoir des commandes de l'outil de gestion 8. Dans un tel mode de réalisation, seuls les commutateurs Ethernet sont ainsi configurés, testés, diagnostiqués et mis à jour. Cela inclut le test des liaisons Ethernet 6 qui y sont connectées.

Un commutateur Ethernet est adapté pour recevoir et traiter en outre des commandes issues du bus CAN à exercer sur d'autres éléments du réseau Ethernet. Un tel commutateur Ethernet comporte alors, outre le bloc de commutation de trames Ethernet 14, le bloc de traitement 15, le contrôleur de bus de communication CAN 16, le connecteur 17 et la pluralité de ports Ethernet 18 mentionnés plus haut, un contrôleur de bus de communication Ethernet disposé entre le bloc de traitement 15 et les ports Ethernet 18, et des couches logicielles associées.

Le bloc de traitement 15 est alors en outre adapté pour, sur réception de la commande qui lui est transmise par le contrôleur de bus de communication CAN 16, en extraire le ou les identifiants d'élément(s) du réseau Ethernet indiqué(s) (i.e. le commutateur Ethernet 5 ayant reçu cette commande, un ou des dispositifs secondaires 7, d'autres commutateurs Ethernet 5 du réseau) et la ou les actions associées.

Lorsque l'élément de réseau concerné est le commutateur Ethernet lui-même ayant reçu la commande par le contrôleur de bus de communication CAN 16, de la même façon que décrit précédemment, le bloc de traitement 15 du commutateur Ethernet interprète la commande issue du bus CAN en commande au bloc de commutation 14.

Lorsque l'élément de réseau concerné est un élément Ethernet autre que le commutateur Ethernet ayant reçu la commande, la commande est convertie par le bloc de commande 15 en trame Ethernet (le bloc de commande 15 est adapté pour déterminer les trames Ethernet correspondant aux différentes commandes issues du bus CAN et aux différents dispositifs Ethernet susceptibles d'être adressés) et transmise à l'élément Ethernet à travers le contrôleur de bus de communication Ethernet. Dans ce mode, il est ainsi possible de configurer, tester, diagnostiquer et mettre à jour tous les dispositifs Ethernet dans le réseau Ethernet.

Le protocole utilisé sur le bus Ethernet pour configurer, tester, diagnostiquer et mettre à jour un dispositif Ethernet est par exemple SNMP.

Une telle commande est par exemple une commande de configuration des paramètres de routage réseau du bloc 7₆ de communication sans fil.

Dans un mode de réalisation, une fois la commande effectuée, le module de traitement 15 du commutateur Ethernet 5 ayant initialement reçu le message au format J1939 est adapté pour générer, au format J1939, un message de réponse indiquant le résultat de l'action après qu'elle ait été mise en œuvre (par exemple : configuration requise OK ou KO etc.) destiné à l'outil de gestion technique 8, pour le fournir au contrôleur de bus de communication CAN 16, qui le transmet, conformément au protocole CAN, sur le bus CAN 2 via le connecteur 17 à destination de l'outil de gestion technique 8.

Ainsi, lorsque le réseau Ethernet du bus 1 comporte plusieurs commutateurs Ethernet 5, suivant les modes de réalisation, seul un d'entre eux ou plusieurs sont connectés au bus CAN 2 via un connecteur du type du connecteur 17 de la figure 2.

La figure 3 représente une configuration de maillage entre les dispositifs primaires 3 et l'outil de gestion technique 8, la passerelle 4, deux commutateurs Ethernet 5 selon l'invention et les dispositifs secondaires 7, à l'aide des liaisons Ethernet 6 et du bus de communication 2.

La présente invention permet ainsi la mise en œuvre des opérations de maintenance, d'installation, mise à jour et/ou de test d'éléments du réseau Ethernet via un outil de gestion raccordé au bus de communication CAN et permettant par ailleurs de réaliser ces mêmes opérations vis-à-vis des éléments du réseau primaire. La mise en œuvre de la gestion technique du bus de transport de passagers 1 est donc rationalisée et simplifiée.

## Revendications

1. Commutateur Ethernet (5), comprenant :
- un ensemble de ports Ethernet (18) adaptés pour être connectés à des dispositifs respectifs (7) d'un réseau Ethernet via des liaisons Ethernet (6) ;
- un module de commutation (14) de trame Ethernet adapté pour recevoir une trame Ethernet, pour sélectionner un port Ethernet dudit ensemble en fonction de ladite trame Ethernet reçue et pour fournir ladite trame audit port Ethernet sélectionné,
ledit commutateur Ethernet étant **caractérisé en ce qu'**il comprend en outre un connecteur (17) adapté pour être connecté à un bus de communication (2) distinct d'une liaison Ethernet ;
ledit commutateur Ethernet étant **caractérisé en outre en ce qu'**il est adapté pour recevoir, via ledit connecteur, au moins un message de commande d'une opération transmis sur le bus de communication au format J1939, la commande étant une commande de diagnostic transmise suite à la détection d'une panne du bus, et pour réaliser, en fonction dudit message reçu, au moins l'opération commandée dans ledit message, ladite opération étant une opération parmi les opérations suivantes :
- un test du câblage du réseau Ethernet ;
- un diagnostic du câblage du réseau Ethernet.

2. Commutateur Ethernet (5) selon la revendication 1, dans lequel le connecteur (17) est adapté pour être connecté à un bus CAN (2).

3. Commutateur Ethernet (5) selon la revendication 1 ou 2, dans lequel le connecteur (17) est un connecteur DB-9.

4. Commutateur Ethernet (5) selon l'une quelconque des revendications précédentes, adapté en outre pour générer un message de réponse dont le contenu indique le résultat de ladite opération réalisée, et pour transmettre ledit message de réponse sur le bus de communication (2) via ledit connecteur (17).

5. Commutateur Ethernet (5) selon l'une quelconque des revendications précédentes, adapté pour être installé dans un engin mobile (1).

6. Engin mobile (1), comprenant :
- au moins un commutateur Ethernet (5) selon l'une des revendications précédentes,
- lesdites liaisons Ethernet (6) ;
- lesdits premiers dispositifs (7) connectés à des ports Ethernet respectifs du commutateur Ethernet via lesdites liaisons Ethernet ;
- au moins un bus de communication (2) distinct d'un bus Ethernet et connecté au connecteur (17) du commutateur Ethernet ;
- des seconds dispositifs (3) connectés chacun directement au bus de communication.

7. Engin mobile (1) selon la revendication 6, l'engin mobile étant un bus de transport de passagers.

8. Système comprenant l'engin mobile (1) selon les revendications 6 à 7, et un outil de supervision (8) adapté pour effectuer des opérations de configuration et de diagnostic des seconds dispositifs (3) via des communications, sur ledit bus de communication, avec lesdits seconds dispositifs, ledit outil de supervision étant adapté en outre pour générer ledit message de commande d'une opération, pour le transmettre sur ledit bus de communication audit commutateur Ethernet.

9. Système selon la revendication 8, dans lequel le commutateur Ethernet (5) est adapté pour générer un message de réponse dont le contenu indique le résultat de ladite opération réalisée, et pour transmettre ledit message de réponse sur le bus de communication (2) via ledit connecteur (17) à destination dudit outil de supervision (8).

## Patentansprüche

1. Ethernet-Switch (5), aufweisend:
- eine Anordnung von Ethernet-Anschlüssen (18), welche dazu eingerichtet sind, mit jeweiligen Vorrichtungen (7) eines Ethernet-Netzwerks mittels Ethernet-Verbindungen verbunden zu werden,
- ein Modul zum Vermitteln (14) von Ethernet-Rahmen, welches dazu eingerichtet ist, einen Ethernet-Rahmen zu empfangen, einen Ethernet-Anschluss der Anordnung in Abhängigkeit von dem empfangenen Ethernet-Rahmen auszuwählen und den besagten Rahmen an den ausgewählten Ethernet-Anschluss bereitzustellen,
wobei der Ethernet-Switch **dadurch gekennzeichnet ist, dass** er ferner eine Verbindungseinrichtung (17) aufweist, welche dazu eingerichtet ist, mit einem Kommunikationsbus, welcher von einer Ethernet-Verbindung verschieden ist, verbunden zu werden,
wobei der Ethernet-Switch ferner **dadurch gekennzeichnet ist, dass** er dazu eingerichtet ist, um über die Verbindungseinrichtung mindestens eine Befehlsnachricht eines Vorgangs, welche über den Kommunikationsbus im Format J1939 gesendet wird, zu empfangen, wobei der Befehl ein Diagnosebefehl ist, welcher im Anschluss an die Detektion eines Ausfalls des Busses gesendet wird, und um, in Abhängigkeit von der empfangenen Nachricht, mindestens den in der Nachricht befohlenen Vorgang umzusetzen, wobei der Vorgang ein Vorgang ist, welcher aus den folgenden Vorgängen ausgewählt ist:
- ein Test der Verkabelung des Ethernet-Netzwerks,
- eine Diagnose der Verkabelung des Ethernet-Netzwerks.

2. Ethernet-Switch (5) gemäß dem Anspruch 1, wobei die Verbindungseinrichtung (17) dazu eingerichtet ist, mit einem CAN-Bus (2) verbunden zu werden.

3. Ethernet-Switch (5) gemäß dem Anspruch 1 oder 2, wobei die Verbindungseinrichtung (17) eine DB-9-Verbindungseinrichtung ist.

4. Ethernet-Switch (5) gemäß einem der vorhergehenden Ansprüche, welcher ferner dazu eingerichtet ist, eine Antwortnachricht zu erzeugen, deren Inhalt das Ergebnis des umgesetzten Vorgangs angibt, und die Antwortnachricht auf dem Kommunikationsbus (2) über die Verbindungseinrichtung (17) zu senden.

5. Ethernet-Switch (5) gemäß einem der vorhergehenden Ansprüche, welcher dazu eingerichtet ist, in einer mobilen Vorrichtung (1) installiert zu sein.

6. Mobile Vorrichtung (1), aufweisend:
- mindestens einen Ethernet-Switch (5) gemäß einem der vorhergehenden Ansprüche,
- Ethernet-Verbindungen (6),
- die ersten Vorrichtungen (7), welche mit den jeweiligen Ethernet-Anschlüssen des Ethernet-Switchs über die Ethernet-Verbindungen verbunden sind,
- mindestens einen Kommunikationsbus (2), welcher von einem Ethernet-Bus verschieden ist und mit der Verbindungseinrichtung (17) des Ethernet-Switchs verbunden ist,
zweite Vorrichtungen (3), welche direkt an den Kommunikationsbus angeschlossen sind.

7. Mobile Vorrichtung (1) gemäß dem Anspruch 6, wobei die mobile Vorrichtung ein Bus zur Beförderung von Passagieren ist.

8. System, welches die mobile Vorrichtung (1) gemäß den Ansprüchen 6 bis 7 und ein Überwachungswerkzeug (8) aufweist, welches dazu eingerichtet ist, Vorgänge zur Konfiguration und zur Diagnose von zweiten Vorrichtungen (3) mittels Kommunikationen über den Kommunikationsbus mit den zweiten Vorrichtungen durchzuführen, wobei das Überwachungswerkzeug ferner dazu eingerichtet ist, die Befehlsnachricht eines Vorgangs zu erzeugen, um diese über den Kommunikationsbus des Ethernet-Switchs zu übertragen.

9. System gemäß dem Anspruch 8, wobei der Ethernet-Switch (5) dazu eingerichtet ist, eine Antwortnachricht zu erzeugen, deren Inhalt das Ergebnis des umgesetzten Vorgangs angibt, und die Antwortnachricht auf dem Kommunikationsbus (2) über die Verbindungseinrichtung (17) an das Überwachungswerkzeug (8) zu senden.

## Claims

1. Ethernet commutator (5) comprising:
- an assembly of Ethernet ports (18) which are adapted to be connected to respective devices (7) of an Ethernet network via Ethernet links (6);
- an Ethernet frame commutation module (14) which is adapted to receive an Ethernet frame in order to select an Ethernet port of said assembly as a function of said received Ethernet frame and to supply said frame to said selected Ethernet port,
said Ethernet commutator being **characterised in that** it comprises furthermore a connector (17) which is adapted to be connected to a communication bus (2) separate from an Ethernet link;
said Ethernet commutator being characterised furthermore **in that** it is adapted to receive, via said connector, at least one message for ordering an operation transmitted on the communication bus in the J1939 format, the command being a diagnostic command which is transmitted following detection of a breakdown of the bus, and to implement, as a function of said received message, at least the operation ordered in said message, said operation being an operation from the following operations:
- a test of the cabling of the Ethernet network;
- a diagnosis of the cabling of the Ethernet network.

2. Ethernet commutator (5) according to claim 1, in which the connector (17) is adapted to be connected to a CAN bus (2).

3. Ethernet commutator (5) according to claim 1 or 2, in which the connector (17) is a DB-9 connector.

4. Ethernet commutator (5) according to any of the preceding claims, which is adapted furthermore to generate a response message, the content of which indicates the result of said implemented operation, and to transmit said response message on the communication bus (2) via said connector (17).

5. Ethernet commutator (5) according to any of the preceding claims which is adapted to be installed in a mobile machine (1).

6. Mobile machine (1) comprising:
- at least one Ethernet commutator (5) according to any of the preceding claims,
- said Ethernet links (6);
- said first devices (7) connected to the respective Ethernet ports of the Ethernet commutator via said Ethernet links;
- at least one communication bus (2) separate from an Ethernet bus and connected to the connector (17) of the Ethernet commutator;
- second devices (3) which are each connected directly to the communication bus.

7. Mobile machine (1) according to claim 6, the mobile machine being a bus for transport of passengers.

8. System comprising the mobile machine (1) according to claims 6 to 7, and a supervision tool (8) which is adapted to implement configuration and diagnostic operations of the second devices (3) via communications, on said communication bus, with said second devices, said supervision tool being adapted furthermore to generate said message for ordering an operation in order to transmit it on said communication bus to said Ethernet commutator.

9. System according to claim 8, in which the Ethernet commutator (5) is adapted to generate a response message, the content of which indicates the result of said implemented operation and to transmit said response message on the communication bus (2) via said connector (17) to the destination of said supervision tool (8).
